# EUROPÄISCHE PATENTSCHRIFT

(11) **EP 2 731 748 B1**
(45) Veröffentlichungstag und Bekanntmachung des Hinweises auf die Patenterteilung: **07.03.2018**
(21) Anmeldenummer: 12730501.9
(22) Anmeldetag: 25.06.2012
(51) Int. Cl.: B23K 26/00, C03B 29/00, C03C 23/00, C03B 29/02

(54) **VERFAHREN ZUR KANTENGLÄTTUNG EINER GLASSCHEIBE**
METHOD FOR SMOOTHING THE EDGES OF A SHEET OF GLASS
PROCÉDÉ DE POLISSAGE DES BORDS D'UNE VITRE

(30) Priorität: 14.07.2011 EP 11173926
(43) Veröffentlichungstag der Anmeldung: 21.05.2014
(73) Patentinhaber: Saint-Gobain Glass France, 92400 Courbevoie (FR)
(72) Erfinder: PHAN, Dang Cuong, 52062 Aachen (DE); YEH, Li-Ya, 52511 Geilenkirchen (DE); LETOCART, Philippe, B-4730 Raeren (BE)
(74) Vertreter: Lendvai, Tomas
(86) Internationale Anmeldenummer: PCT/EP2012/062212
(87) Internationale Veröffentlichungsnummer: WO 2013/007504

(56) Entgegenhaltungen:
- WO-A1-03/015976
- JP-A- 2006 273 695
- JP-A- 2009 035 433
- US-A- 3 935 419
- US-A1- 2006 179 722
- US-A1- 2008 202 167

## Beschreibung

Die Erfindung betrifft ein Verfahren zur Kantenglättung einer Glasscheibe und eine mit dem Verfahren erhaltene Glasscheibe.

Glasscheiben können über unterschiedliche Verfahren hergestellt werden. Eine heute sehr gebräuchliche Herstellungsmethode ist das Floatverfahren. Hierbei wird eine Glasschmelze aus den Ausgangsmaterialien Siliziumdioxid, Natriumoxid und Kalziumoxid in einer großen Schmelzwanne hergestellt. Das Abkühlen erfolgt in einem kontinuierlichen Prozess auf einer Schicht flüssigem Zinn und anschließend auf luftgekühlten Laufbändern. Das entstehende Glasendlosband wird anschließend auf seine endgültige Größe zugeschnitten. Die Abkühlung auf dem Laufband und das Zuschneiden der Glasabmessung erzeugen im Regelfall recht scharfkantige Glaskanten.

Je nach Anwendungsbereich der späteren Glasscheibe und um Verletzungen beim Einbau und Transport der Scheiben zu vermeiden, müssen in vielen Fällen die Glasscheiben zugeschnitten werden und die Glasskanten abgeschliffen oder abgerundet werden. Dies kann über Schleif-, Ätz- und Erwärmungsverfahren erfolgen, welche häufig recht aufwendige Apparaturen und zusätzliche, teilweise gesundheitsschädliche Chemikalien voraussetzen. Die Mengen an abgetragenem Material müssen vor dem Zuschnitt auf die Dimensionierung der Scheibe zugerechnet werden. Gerade aber mechanische und chemische Abtragungsverfahren sind nur schwer vorausberechenbar. Zudem sind die Resultate der Kantenglättung teilweise nur schwer reproduzierbar. Die mechanische und chemische Behandlung kann zu Mikrorissen in der Glasscheibe führen. Insbesondere im Kantenbereich der Glasscheibe kann so die Glasfestigkeit um Größenordnungen abnehmen.

Eine alternative Bearbeitungsmethode stellt die Kantenglättung mittels Laser dar. Laser (Light Amplification by Stimulated Emission) zeichnen sich durch sehr monochromamtisches Licht mit einer großen Koheränzlänge aus. Sie finden Anwendung in vielen technischen und medizinischen Anwendungsbereichen. In der Medizin werden Laser häufig als Skalpell, Diagnosewerkzeug oder zum Veröden eingesetzt. Bedeutende technische Einsatzfelder finden sich beispielsweise in der Spektroskopie, Laserentfernungsmessung sowie bei präzisen Schneid- und Schweißprozessen von Metallen, Keramiken und Gläsern.

Hierzu werden die Kanten beispielsweise mit einem 10 µm CO₂-Laser oder 1,06 µm Nd-YAG Laser mit einer Leistung im kW-Bereich bestrahlt und aufgeheizt. Die Anwendung eines Lasers und damit einer über die Wellenlänge und Leistung des Laser reproduzierbare, definierte Energie ermöglicht eine gleichmäßige Glättung der Glaskanten.

Die lokale Aufheizung eines in der Regel kleinen Bereichs der Glaskante kann bei der Verschiebung des Lasers auf einen noch nicht bestrahlten Bereich in einem anschließenden schnellen Abkühlungsprozess resultieren. Dieser schnelle Abkühlungsprozess ruft gleichzeitig thermische Spannungen im Glas hervor. Dieser lokale "Vorspannprozess" bewirkt auf einer Seite eine deutliche Festigung des Glases im Kantenbereich. Da die Abkühlung von häufig 700 °C bis 1100 °C im Glas zur Raumtemperatur in der Umgebungsluft erfolgt, ist die Prozesssteuerung auf der anderen Seite schwierig. Insbesondere die Einstellung des Grades des thermischen Vorspannens ist nur schwer reproduzierbar. Auch die Verwendung eines gasförmigen oder flüssigen Kühlmediums verbessert die Prozesssteuerung nur geringfügig.

US 2010/0119846 A1 offenbart eine verstärkte Glassplatte und ein Verfahren zu deren Herstellung. Das Verfahren beinhaltet einen Teilungsschritt, bei dem die Glasplatte mit Laser, beispielsweise mit einem Kohlendioxidlaser geschnitten wird.

US 2010/0279067 A1 offenbart eine Glassplatte mit verstärkten Eckbereichen mit Eckbereichsspannung von etwa 90 MPa. Die Eckbereiche werden über einen Laserschnittprozess und anschließenden Quenchen mit einem Kühlmedium erzeugt. In einer bevorzugten Ausführungsform wird der Prozess nach dem Quenchen noch mit einem zweiten Laserbehandlungsschritt auf der gleichen Seite der Glasplatte abgeschlossen.

US 6,521,862 B1 offenbart die Verwendung eines Kohlendioxidlasers zur Abrundung und Polierung einer Platte. Die Anwendung von Laserenergie im Kantenbereich führt zu einem Anschmelzen im Kantenbereich und einer anschließenden Erstarrung in einer runderen Form. Bei einer Laserwellenlänge von 10 µm reicht die Strahlung etwa 1 µm in das Glas und kann in diesem Bereich Kanten glätten.

JP 2009-035433 A offenbart ein Verfahren zum Abschrägen eines Glassubstrats. Der Eckbereich des Glassubstrats wird von einem Laser erhitzt und gleichzeitig ein benachbarter Teil der Glasoberfläche von mindestens einem weiteren Laser. Die zur Glaskante benachbarte Oberfläche wird auf einer höheren Temperatur gehalten als die Glaskante selbst. Die Laserstrahlen weisen bevorzugt eine Wellenlänge von 3 µm bis 11 µm auf.

Die US 6,744,009 B1 und US 3,935,419 A offenbaren Laserprozesse zur Glasbehandlung. Die US 2008/0202167 A1 offenbart einen thermischen Prozess zur Kantenbehandlung. JP-A-2006273695 offenbart ein Verfahren zur Kantenglättung unter Verwendung zweier Laserstrahlen. Die Aufgabe der vorliegenden Erfindung liegt darin, ein Verfahren zur Kantenglättung einer Glasscheibe bereitzustellen, welches eine reproduzierbare, gleichmäßige Abtragung von Glasmaterial sowie gleichzeitige Variation und Einstellen von mechanischer Spannung ermöglicht und die Bildung von Mikrorissen im Bereich der Glaskante verhindert.

Die Aufgabe der vorliegenden Erfindung wird erfindungsgemäß durch ein Verfahren gemäß Anspruch 1 gelöst. Bevorzugte Ausführungen gehen aus den Unteransprüchen hervor.

Eine erfindungsgemäße Vorrichtung zur Herstellung einer Glasscheibe mit abgerundeten Kanten geht aus einem weiteren unabhängigen Anspruch hervor.

Beim erfindungsgemäßen Verfahren zur Kantenglättung einer Glasscheibe wird eine Scheibenkante einer Glasscheibe mit einem ersten Laserstrahl aus einem ersten Laser mit einer Wellenlänge von 6 µm bis 12 µm beaufschlagt. Der erste Laserstrahl erzeugt einen ersten lokalen Heizbereich auf der Scheibenkante. Der erste lokale Heizbereich dehnt sich bevorzugt kreisförmig um den auftreffenden ersten Laserstrahl entlang der Scheibenkante aus. Das vom Laser emittierte infrarote Licht der Wellenlänge 6 µm bis 12 µm kann die Glasscheibe nicht oder nur geringfügig durchdringen und erhitzt hauptsächlich die Glasscheibenoberfläche. Die Scheibenkante schmilzt vor dem dahinterliegenden Scheibenkörper. Die lokale Anwendung des Lasers auf der Glasscheibenoberfläche ermöglicht auf diese Art und Weise ein Schmelzen und Abrunden der Scheibenkante ohne gleichzeitig den Glasscheibenkörper anzuschmelzen. Ein Anschmelzen des Glasscheibenkörpers könnte sonst eine Verformung der Glasscheibe über den Randbereich hinaus bewirken. Der erste lokale Heizbereich weist bevorzugt eine Fläche mit einer Breite von 0,1 mm bis 2 mm auf und erwärmt den ersten lokalen Heizbereich auf bevorzugt mehr als den Transformationspunkt des Glases, z.B. 570 °C für Fensterglas und bewirkt ein Schmelzen der Scheibenkante im (ersten) lokalen Heizbereich bis auf eine Tiefe von 2 mm bis 3 mm.

Parallel oder anschließend zur Erzeugung des ersten lokalen Heizbereichs wird die Glasscheibe, bevorzugt von der dem ersten Laser entgegengesetzten Seite, mit einem zweiten Laserstrahl aus einem zweiten Laser mit einer Wellenlänge von 0,30 µm bis 2,00 µm beaufschlagt und ein zweiter lokaler Heizbereich unterhalb des ersten lokalen Heizbereich innerhalb der Glasscheibe erzeugt. Der zweite lokale Heizbereich ist bevorzugt genau so groß oder größer als der erste lokale Heizbereich. Der Ausdruck "benachbart" bedeutet im Sinne der Erfindung angrenzend oder überschneidend zum ersten lokalen Heizbereich und bevorzugt in einem maximalen Abstand von 20 mm - 50 mm, besonders bevorzugt in einen maximalen Abstand der halben Glasdicke zum ersten lokalen Heizbereichs.

Der zweite Laserstrahl durchdringt aufgrund der Wellenlänge von 0,30 µm bis 2,00 µm die Glasscheibe und erwärmt im Focus des Laserstrahls den zweiten Heizbereich innerhalb der Glasscheibe. Der zweite Laserstrahl kontrolliert über den zweiten Heizbereich das Abkühl- oder Temperverhalten der im ersten Heizbereich erwärmten Scheibenkante. Abhängig von der Intensität und Dauer des zweiten Laserstrahls kühlt sich der erste lokale Heizbereich langsamer wieder ab. Der zweite Laser wird bevorzugt aktiviert, wenn das Glas im ersten lokalen Heizbereich zu schmelzen beginnt.

Der erste Laserstrahl und/oder zweite Laserstrahl werden bevorzugt über Spiegel, Gitter oder Linsen auf die entsprechende Position in oder an der Glasscheibe gerichtet oder fokussiert. Der Schmelzvorgang setzt in Abhängigkeit von der Glaszusammensetzung bei größer als 600 °C ein. Die hohe Oberflächenspannung der Glasschmelze bildet eine abgerundete und somit oberflächenspannungsminimierte Konfiguration. Die Glasscheibe enthält bevorzugt Flachglas, Floatglas, Quarzglas, Borosilikatglas, Kalk-Natron-Glas und/oder Gemische davon. Die Glasscheibe weist bevorzugt eine Dicke von 1 mm bis 10 mm auf. Die Abmessungen der Glasscheibe sind bevorzugt von 10 cm mal 10 cm bis 3 m mal 6 m. Der erste Laserstrahl wird anschließend entlang und der zweite Laserstrahl parallel zur der Scheibenkante geführt, wobei der zweite Laserstrahl auf gleicher Höhe oder hinter dem ersten Laserstrahl geführt wird. Der Ausdruck "auf gleicher Höhe oder hinter dem ersten Laserstrahl" bezieht sich auf die Position der von den beiden Laserstrahlen erzeugten lokalen Heizbereiche in der Führungsrichtung entlang der Scheibenkante. Der Ausdruck "hinter" bezieht sich auf den Abstand der beiden Laserstrahlen, bevorzugt von maximal 20 mm bis 50 mm. Die Abkühlgeschwindigkeit liegt bevorzugt zwischen 1 K/s bis 100 K/s.

Der erste Laserstrahl und/oder zweite Laserstrahl werden bevorzugt mit einer kontinuierlichen oder diskontinuierlichen Geschwindigkeit von 0,01 mm/s bis 100 mm/s entlang der Scheibenkante geführt. Die Geschwindigkeit richtet sich bevorzugt nach der Leistung des ersten und zweiten Lasers. Je höher die Leistung des Lasers gewählt wird, desto schneller können die Laserstrahlen entlang der Scheibenkante geführt werden. Das Führen der Laserstrahlen kann entweder durch Bewegung der Scheibe entlang des Laserstrahls oder durch Bewegung der Laser entlang der Scheibe erfolgen. Der erste Laserstrahl kann sowohl mit der gleichen Geschwindigkeit wie der zweite Laserstrahl geführt werden oder alternativ mit einer höheren Geschwindigkeit als der zweite Laserstrahl.

Der erste Laserstrahl und/oder der zweite Laserstrahl werden bevorzugt in Abhängigkeit von der Temperatur des ersten lokalen Heizbereiches und/oder des zweiten lokalen Heizbereiches entlang der Scheibenkante geführt. Die Führung der Laserstrahlen entlang der Scheibenkante erfolgt bevorzugt diskontinuierlich in Abhängigkeit von der Temperatur des ersten lokalen Heizbereichs und zweiten lokalen Heizbereiches. Bei Erreichen der Schmelztemperatur des Glases im jeweils lokalen Heizbereich werden die Laserstrahlen weiter entlang der Scheibenkante geführt.

Der erste Laser umfasst bevorzugt einen CO₂ Laser. Der erste Laser weist bevorzugt eine Wellenlänge von 10 µm bis 11 µm, besonders bevorzugt 10,6 µm auf. Das vom Kohlendioxidlaser emittierte infrarote Licht der bevorzugten Wellenlänge von 10,6 µm heizt die Scheibenkante an der Oberfläche auf und durchdringt nur geringfügig den dahinterliegenden Glaskörper der Glasscheibe.

Der zweite Laser umfasst bevorzugt einen YAG (Yttrium-Aluminium-Granat) oder Dioden Laser, bevorzugt einen Nd-YAG Laser. Der zweite Laser weist bevorzugt eine Wellenlänge von 0,90 µm bis 1,50 µm, bevorzugt 1,06 µm auf. Das bevorzugt emittierte infrarote Licht der Wellenlänge 1,06 µm kann den Glaskörper durchdringen und in Abhängigkeit der Fokussierung sowohl den Glaskörper der Glasscheibe als auch die Glaskante erwärmen. Der zweite Laser erwärmt bevorzugt den unterhalb der Scheibenkante liegenden, an die Scheibekante angrenzenden Bereich auf eine höhere Temperatur, als die vom ersten Laser erwärmte Scheibenkante. Aufgrund der Temperaturdifferenz zum Kern der Glasscheibe bilden sich bei einer schnellen Abkühlung Spannungen im Bereich der Glaskante aus. In dem vom zweiten Laserstrahl erwärmten inneren Bereich kommt es bevorzugt aufgrund der höheren Temperatur und langsameren Abkühlung nicht zu einer Spannungsbildung.

Der erste Laser und/oder der zweite Laser weisen bevorzugt eine Leistung von 0,001 kW bis 100 kW auf. Die Laserleistung richtet sich nach der Glasdicke und Glaszusammensetzung, welche die Schmelztemperatur der Glaskante bestimmen. Die Leistung des ersten Lasers und des zweiten Lasers wird bevorzugt während des Verfahrens variiert und ermöglicht so eine entsprechende Variation der Heiz- und Abkühlgeschwindigkeit. Ausgehend von der Leistung des Lasers ist die Abkühlgeschwindigkeit der Scheibenkante bevorzugt von 10 K/s bis 100 K/s, für eine nahezu spannungsfreie Scheibenkante von 0,1 K/s bis 5 K/s.

Die Temperaturen des ersten lokalen Heizbereiches und/oder des zweiten lokalen Heizbereiches werden bevorzugt über ein erstes Pyrometer und/oder ein zweites Pyrometer bestimmt. Das Pyrometer erlaubt über die emittierte Wärmestrahlung in Verbindung mit dem Stefan-Boltzmann-Gesetz eine berührungsfreie Temperaturmessung.

Die Temperatur des ersten lokalen Heizbereiches ist bevorzugt niedriger als die Temperatur des zweiten lokalen Heizbereiches. Durch den Temperaturunterschied der benachbarten Heizbereiche erreicht man ein Vorspannen der Glaskante, da der Bereich der Glaskante schneller abkühlt als der Glasscheibenkern und somit mechanische Spannungen in der Glaskante induziert werden. Die Temperatur des ersten lokalen Heizbereiches und des zweiten lokalen Heizbereiches kann über die Leistung des entsprechenden ersten Lasers und des zweiten Lasers reguliert werden.

Die Scheibenkante der Glasscheibe wird entlang des fixierten ersten Lasers und des fixierten zweiten Lasers geführt. Alternativ kann der erste Laser und der zweite Laser entlang der fixierten Scheibenkante geführt werden.

Das erste Pyrometer und zweite Pyrometer sowie der erste Laser und zweite Laser werden im erfindungsgemäßen Verfahren bevorzugt mit einem Lasercontroller verbunden. Der Lasercontroller erhält über die Pyrometer die Temperaturen der Scheibenkante sowie der darunter befindlichen Glasscheibe und kann zusammen mit vordefinierten Parametern die Laserleistung des ersten und zweiten Lasers regulieren.

Der erste Laserstrahl und/oder der zweite Laserstrahl weisen bevorzugt einen Durchmesser von 1 mm bis 3 mm auf.

Das erste lokale Heizfeld und/oder das zweite lokale Heizfeld weisen bevorzugt eine runde, elliptische oder rechteckige Form auf.

Die Erfindung betrifft weiter eine Glasscheibe mit abgerundeten Kanten erhältlich nach dem erfindungsgemäßen Verfahren.

Im Folgenden wird die Erfindung anhand einer Zeichnung sowie eines Beispiels näher erläutert. Die Zeichnung ist rein schematisch und nicht maßstabsgetreu. Die Zeichnung schränkt die Erfindung in keiner Weise ein.

Es zeigen:
Figur 1 eine schematische Anordnung nach dem erfindungsgemäßen Verfahren,
Figur 2 eine schematische Anordnung einer bevorzugten Ausführungsform des erfindungsgemäßen Verfahrens und
Figur 3 ein Fließschema des erfindungsgemäßen Verfahrens.

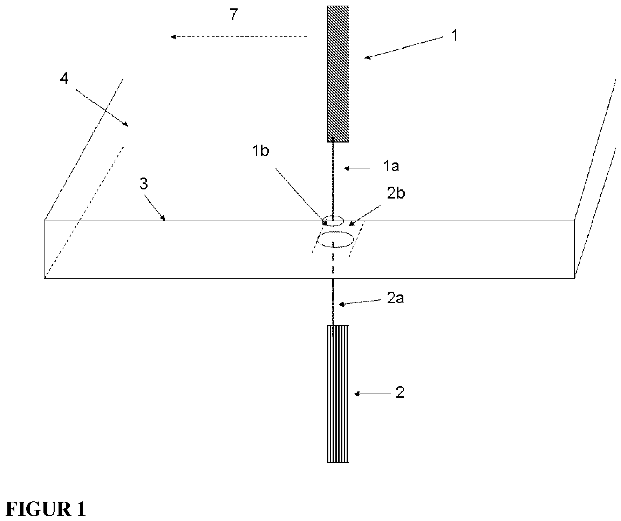

Figur 1 zeigt eine schematische Anordnung nach dem erfindungsgemäßen Verfahren. Eine Scheibenkante (3) einer Glasscheibe (4) wird von einem ersten Laser (1) mit einer Wellenlänge von 6 µm bis 12 µm bestrahlt und über einen ersten Laserstrahl (1a) ein erster lokaler Heizbereich (1b) erzeugt. Parallel oder anschließend wird die Glasscheibe (4) mit einem zweiten Laserstrahl (2a) aus einem zweiten Laser (2) mit einer Wellenlänge von 0,30 µm bis 2,00 µm beaufschlagt und ein zweiter lokaler Heizbereich (2b) benachbart zu dem ersten lokalen Heizbereich (1b) unterhalb der Scheibenkante (3) erzeugt. Der zweite lokale Heizbereich (2b) dehnt sich nicht gezeigt näherungsweise kugelförmig um den flächig gezeichneten Bereich (2b) aus. Der gestrichelte Pfeil gibt die Laufrichtung (7) des ersten Lasers (1) und zweiten Lasers (2) entlang der Glasscheibe (4) an. Die Verschiebung in Laufrichtung (7) kann sowohl kontinuierlich als auch diskontinuierlich erfolgen.

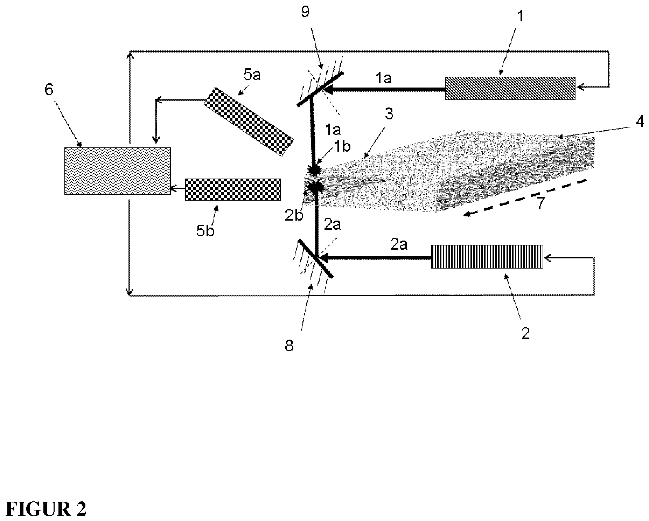

Figur 2 zeigt eine schematische Anordnung nach einer bevorzugten Ausführungsform des erfindungsgemäßen Verfahrens. Eine Scheibenkante (3) einer Glasscheibe (4) wird von einem ersten Laser (1) mit einer Wellenlänge von 6 µm bis 12 µm bestrahlt. Der vom ersten Laser (1) emittierte erste Laserstrahl (1a) wird über einen ersten Spiegel (9) auf die Scheibenkante (3) gelenkt und erzeugt dort ein erstes lokales Heizfeld (1b). Die Temperatur des ersten lokalen Heizfeldes (1b) wird über ein erstes Pyrometer (5a) ermittelt und an einen Controller (6) übermittelt. Die Glasscheibe (4) wird mit einem zweiten Laserstrahl (2a) aus einem zweiten Laser (2) mit einer Wellenlänge von 0,30 µm bis 2,00 µm über einen zweiten Spiegel (8) beaufschlagt und ein zweiter lokaler Heizbereich (2b) benachbart zu dem ersten lokalen Heizbereich (1b) unterhalb der Scheibenkante (3) erzeugt. Der erste Spiegel (9) und der zweite Spiegel (8) werden bevorzugt auf einem Scannersystem, beispielsweise Galvanoscanner oder Polygoscanner, montiert. Ein zweites Pyrometer (5b) ermittelt die Temperatur des zweiten lokalen Heizbereichs (2b) und übermittelt diese an den Controller (6). Der Controller (6) ist mit dem ersten Laser (1) und dem zweiten Laser (2) verbunden und steuert deren Leistung in Abhängigkeit eines internen Programms und der Temperatur des ersten lokalen Heizfeldes (1b) und des zweiten lokalen Heizfeldes (2b). Nach Erwärmung und Erweichung der Scheibenkante (3) wird die Glasscheibe in Laufrichtung (7) bewegt.

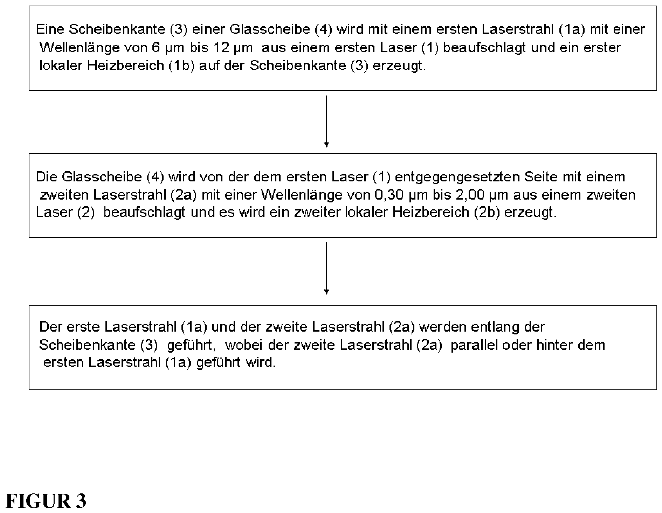

Figur 3 zeigt ein Fließschema des erfindungsgemäßen Verfahrens. In einem ersten Schritt wird eine Scheibenkante (3) einer Glasscheibe (4) mit einen ersten Laserstrahl (1a) mit einer Wellenlänge von 6 µm bis 12 µm aus einem ersten Laser (1), bevorzugt einem Kohlendioxidlaser, beaufschlagt und ein erster lokaler Heizbereich (1b) auf der Scheibenkante (3) der Glasscheibe (4) erzeugt. Die Glasscheibe (4) wird von der dem ersten Laser (1) entgegengesetzten Seite mit einem zweiten Laserstrahl (2a) mit einer Wellenlänge von 0,30 µm bis 2,00 µm aus einem zweiten Laser (2) beaufschlagt und es wird ein zweiter lokaler Heizbereich (2b) erzeugt. Der erste Laserstrahl (1a) und der zweite Laserstrahl (2a) werden entlang der Scheibenkante (3) geführt, wobei der zweite Laserstrahl (2a) parallel oder hinter dem ersten Laserstrahl (1a) geführt wird. Wird der zweite Laserstrahl (2a) hinter dem ersten Laserstrahl (1a) geführt, so kann mit dem erzeugten zweiten lokalen Heizfeld (2b) das Abkühlverhalten des ersten lokalen Heizfeldes gesteuert werden. In dem Fall, dass der zweite Laserstrahl (2a) und das zweite lokale Heizfeld (2b) parallel oder auf gleicher Höhe zum ersten Heizfeld (1b) geführt werden, so kühlt das erste Heizfeld (1b) bei Verschiebung des ersten und zweiten Laserstrahls (1a, 2a) schneller ab.

Im Folgenden wird die Erfindung anhand eines Beispiels näher erläutert.

### Beispiel:

Eine Scheibenkante (3) einer Glasscheibe (4) aus Flachglas mit einer Dicke von 2,1 mm wird mit einem ersten Laserstrahl (1a) aus einem ersten (Kohlendioxid) Laser (1) mit einer Leistung von 50 kW/m² und mit einer Wellenlänge von 10,6 µm beaufschlagt. Der erste Laserstrahl erzeugt an der ersten Kante ein erstes lokales Heizfeld (1b) mit einer Temperatur von etwa 700 °C. Parallel dazu wird ein zweiter (Nd-YAG) Laser (2) mit einer Wellenlänge von 1,06 µm zur Erzeugung eines zweiten lokalen Heizfeldes (2b) auf die Glasscheibe (4) 1 mm entfernt zum ersten lokalen Heizfeld (1b) fokussiert. Die Heizleistung des Nd-YAG Lasers (2) wird so eingestellt, dass die Temperatur des zweiten lokalen Heizfeldes (2b) oberhalb, bevorzugt mindestens 5 %, besonders bevorzugt 10 % oberhalb der Temperatur des ersten lokalen Heizfeldes (1b) liegt. Mit einsetzendem Schmelzen der Scheibenkante im ersten lokalen Heizfeldes (1b) wird die Leistung des ersten Lasers langsam auf 40 kW/m² reduziert, bis die Temperatur des ersten lokalen Heizfeldes auf unter 470 °C, d.h. den unteren Kühlpunkt absinkt. Die Leistung des zweiten Lasers wird analog zum ersten Laser geregelt. In Abhängigkeit von der Kühlrate wurde per Simulation die mechanische Spannung im Kantenbereich ermittelt.

**Tabelle 1 : Entwicklung der mechanischen Spannung in Abhängigkeit von der Abkühlrate nach dem Erwärmen mit dem erfindungsgemäßen Verfahren.**

| | Abkühlrate [K/s] | Mechanische Spannung [MPa] | Kantenabrundung |
|---|---|---|---|
| Probe 1 | 1 | ∼ 0 | sehr gut |
| Probe 2 | 100 | 100 | sehr gut |

Die Tabelle zeigt, dass bei einer hohen Abkühlrate wie in Probe 2 mechanische Spannungen im Bereich von 60-100 MPa erzeugt werden können. Gleichzeitig erlaubt das erfindungsgemäße Verfahren auch eine Erzeugung spannungsfreier, abgerundeter Kanten in Probe 1. Sowohl Probe 1 als auch Probe 2 zeigen sehr gut abgerundete Kanten. Diese Ergebnisse waren überraschend und für den Fachmann nicht naheliegend.

### Bezugszeichenliste

- (1): erster Laser
- (1a): erster Laserstrahl
- (1b): erster lokaler Heizbereich
- (2): zweiter Laser
- (2a): zweiter Laserstrahl
- (2b): zweiter lokaler Heizbereich
- (3): Scheibenkante
- (4): Glasscheibe
- (5a): erstes Pyrometer
- (5b): zweites Pyrometer
- (6): Controller
- (7): Laufrichtung
- (8): zweiter Spiegel/Umlenkspiegel
- (9): erster Spiegel/Umlenkspiegel

## Patentansprüche

1. Verfahren zur Kantenglättung einer Glasscheibe, wobei
a. eine Scheibenkante (3) einer Glasscheibe (4) mit einen ersten Laserstrahl (1a) aus einem ersten Laser (1) mit einer Wellenlänge von 6 µm bis 12 µm beaufschlagt wird und ein erster lokaler Heizbereich (1b) an der Scheibenkante (3) in der Glasscheibe (4) erzeugt wird und der erste lokale Heizbereich (1b) eine Fläche mit einer Breite von 0,1 mm bis 2 mm aufweist und auf mehr als den Transformationspunkt des Glases erwärmt wird und ein Schmelzen der Scheibenkante (3) im ersten lokalen Heizbereich (1b) bis auf eine Tiefe von 2 mm bis 3 mm bewirkt,
b. die Glasscheibe (4) mit einem zweiten Laserstrahl (2a) aus einem zweiten Laser (2) mit einer Wellenlänge von 0,30 µm bis 2,00 µm beaufschlagt wird und ein zweiter lokaler Heizbereich (2b) benachbart zu dem ersten lokalen Heizbereich (1b) unterhalb der Scheibenkante (3) in der Glasscheibe (4) erzeugt wird und
c. der erste Laserstrahl (1a) entlang der Scheibenkante (3) und der zweite Laserstrahl (2a) parallel zu der Scheibenkante (3) geführt werden, wobei der zweite Laserstrahl (2a) auf gleicher Höhe oder in einem Abstand von maximal 20 mm - bis 50 mm hinter dem ersten Laserstrahl (1a) geführt wird.

2. Verfahren nach Anspruch 1, wobei der erste Laserstrahl (1a) und/oder zweite Laserstrahl (2a) mit einer Geschwindigkeit von 0,01 mm/s bis 100 mm/s entlang der Scheibenkante (3) geführt werden.

3. Verfahren nach Anspruch 1, wobei der erste Laserstrahl (1a) und/oder der zweite Laserstrahl (2a) in Abhängigkeit der Temperatur des ersten lokalen Heizbereiches (1b) und/oder des zweiten lokalen Heizbereiches (2b) entlang der Scheibenkante (3) gefühlt werden.

4. Verfahren nach einem der Ansprüche 1 bis 3, wobei der erste Laser (1) einen CO₂ Laser umfasst.

5. Verfahren nach einem der Ansprüche 1 bis 4, wobei der erste Laser (1) eine Wellenlänge von 10 µm bis 11 µm, bevorzugt 10,6 µm aufweist.

6. Verfahren nach einem der Ansprüche 1 bis 5, wobei der zweite Laser (2) einen YAG oder Dioden Laser, bevorzugt Nd-YAG umfasst.

7. Verfahren nach einem der Ansprüche 1 bis 6, wobei der zweite Laser (2) eine Wellenlänge von 0,90 µm bis 1,50 µm, bevorzugt 1,06 µm aufweist.

8. Verfahren nach einem der Ansprüche 1 bis 7, wobei der erste Laser (1) und/oder der zweite Laser (2) eine Leistung von 0,001 kW bis 100 kW aufweisen.

9. Verfahren nach einem der Ansprüche 1 bis 8, wobei die Temperatur des ersten lokalen Heizbereiches (1b) und/oder des zweiten lokalen Heizbereiches (2b) über ein erstes Pyrometer (5a) und/oder ein zweites Pyrometer (5b) bestimmt werden.

10. Verfahren nach einem der Ansprüche 1 bis 9, wobei die Temperatur des ersten lokalen Heizbereiches (1b) niedriger als die Temperatur des zweiten lokalen Heizbereiches (2b) gehalten wird.

11. Verfahren nach einem der Ansprüche 1 bis 10, wobei die Scheibenkante (3) entlang des fixierten ersten Lasers (1) und des fixierten zweiten Lasers (2) geführt wird.

12. Verfahren nach einem der Ansprüche 1 bis 10, wobei der erste Laser (1) und der zweite Laser (2) entlang der fixierten Scheibenkante (3) geführt werden.

13. Verfahren nach einem der Ansprüche 1 bis 12, wobei das erste Pyrometer (5a) und zweite Pyrometer (5b) sowie der erste Laser (1) und zweite Laser (2) mit einem Lasercontroller (6) verbunden sind.

14. Verfahren nach Anspruch 13, wobei die Laserleistung des ersten Lasers (1) und des zweiten Laser (2) von dem Lasercontroller (6) in Abhängigkeit von dem ersten Pyrometer (5a) und dem zweiten Pyrometer (5b) gesteuert werden.

15. Verfahren nach einem der Ansprüche 1 bis 14, wobei der erste Laserstrahl (1a) und/oder der zweite Laserstrahl (2a) einen Durchmesser von 1 mm bis 3 mm aufweisen.

## Claims

1. Method for smoothing the edges of a glass pane, wherein
a. a pane edge (3) of a glass pane (4) is subjected to a first laser beam (Ia) from a first laser (1) with a wavelength of 6 µm to 12 µm and a first local heating region (Ib) is produced on the pane edge (3) in the glass pane (4) and the first local heating region (Ib) has an area with a width of 0.1 mm to 2 mm and is heated to more than the transformation point of the glass and causes melting of the pane edge (3) in the first local heating region (Ib) to a depth of 2 mm to 3 mm,
b. the glass pane (4) is subjected to a second laser beam (2a) from a second laser (2) with a wavelength of 0.30 µm to 2.00 µm and a second local heating region (2b) is produced adjacent the first local heating region (Ib) below the pane edge (3) in the glass pane (4), and
c. the first laser beam (Ia) is guided along the pane edge (3) and the second laser beam (2a) is guided parallel to the pane edge (3), with the second laser beam (2a) guided at the same height or at a maximum distance of 20 mm to 50 mm behind the first laser beam (Ia).

2. Method according to claim 1, wherein the first laser beam (Ia) and/or second laser beam (2a) are guided along the pane edge (3) with a speed of 0.01 mm/s to 100 mm/s.

3. Method according to claim 1, wherein the first laser beam (Ia) and/or the second laser beam (2a) are guided along the pane edge (3) as a function of the temperature of the first local heating region (Ib) and/or of the second local heating region (2b).

4. Method according to one of claims 1 through 3, wherein the first laser (1) comprises a CO₂ laser.

5. Method according to one of claims 1 through 4, wherein the first laser (1) has a wavelength of 10 µm to 11 µm, preferably 10.6 µm.

6. Method according to one of claims 1 through 5, wherein the second laser (2) comprises a YAG or diode laser, preferably Nd-YAG.

7. Method according to one of claims 1 through 6, wherein the second laser (2) has a wavelength of 0.90 µm to 1.50 µm, preferably 1.06 µm.

8. Method according to one of claims 1 through 7, wherein the first laser (1) and/or the second laser (2) have a power output of 0.001 kW to 100 kW.

9. Method according to one of claims 1 through 8, wherein the temperature of the first local heating region (Ib) and/or of the second local heating region (2b) is determined via a first pyrometer (5a) and/or a second pyrometer (5b).

10. Method according to one of claims 1 through 9, wherein the temperature of the first local heating region (Ib) is kept lower than the temperature of the second local heating region (2b).

11. Method according to one of claims 1 through 10, wherein the pane edge (3) is guided along the fixed first laser (1) and the fixed second laser (2).

12. Method according to one of claims 1 through 10, wherein the first laser (1) and the second laser (2) are guided along the fixed pane edge (3).

13. Method according to one of claims 1 through 12, wherein the first pyrometer (5a) and second pyrometer (5b) as well as the first laser (1) and second laser (2) are connected to a laser controller (6).

14. Method according to claim 13, wherein the laser power output of the first laser (1) and of the second laser (2) are controlled by the laser controller (6) as a function of the first pyrometer (5a) and the second pyrometer (5b).

15. Method according to one of claims 1 through 14, wherein the first laser beam (Ia) and/or the second laser beam (2a) have a diameter of 1 mm to 3 mm.

## Revendications

1. - Procédé de lissage des arêtes d'une vitre, dans lequel
a. une arête de vitre (3) d'une vitre (4) est soumise à l'effet d'un premier faisceau laser (1a) émis par un premier laser (1) présentant une longueur d'onde de 6 µm à 12 µm et une première zone locale de chauffage (1b) est produite sur l'arête de vitre (3) dans la vitre (4) et la première zone locale de chauffage (1b) présente une surface ayant une largeur de 0,1 mm à 2 mm et est réchauffée à une température supérieure au point de transformation du verre et provoque une fusion de l'arête de vitre (3) dans la première zone locale de chauffage (1b) jusqu'à une profondeur de 2 mm à 3 mm ;
b. la vitre (4) est soumise à l'effet d'un deuxième faisceau laser (2a) émis par un deuxième laser (2) présentant une longueur d'onde de 0,30 µm à 2,00 µm et une deuxième zone locale de chauffage (2b) est produite au voisinage de la première zone locale de chauffage (1b) au-dessous de l'arête de vitre (3) dans la vitre (4) ; et
c. le premier faisceau laser (1a) est guidé le long de l'arête de vitre (3) et le deuxième faisceau laser (2a) est guidé parallèlement à l'arête de vitre (3), le deuxième faisceau laser (2a) étant guidé à la même hauteur ou à une distance d'au maximum 20 mm - jusqu'à 50 mm derrière le premier faisceau laser (1a).

2. - Procédé selon la revendication 1, dans lequel le premier faisceau laser (1a) et/ou le deuxième faisceau laser (2a) sont guidés le long de l'arête de vitre (3) avec une vitesse de 0,01 mm/s à 100 mm/s.

3. - Procédé selon la revendication 1, dans lequel le premier faisceau laser (1a) et/ou le deuxième faisceau laser (2a) sont guidés le long de l'arête de vitre (3) en fonction de la température de la première zone locale de chauffage (1b) et/ou de la deuxième zone locale de chauffage (2b).

4. - Procédé selon l'une des revendications 1 à 3, dans lequel le premier laser (1) comporte un laser au CO₂.

5. - Procédé selon l'une des revendications 1 à 4, dans lequel le premier laser (1) présente une longueur d'onde de 10 µm à 11 µm, de préférence de 10,6 µm.

6. - Procédé selon l'une des revendications 1 à 5, dans lequel le deuxième laser (2) comporte un laser YAG ou un laser à diodes, de préférence Nd-YAG.

7. - Procédé selon l'une des revendications 1 à 6, dans lequel le deuxième laser (2) présente une longueur d'onde de 0,90 µm à 1,50 µm, de préférence de 1,06 µm.

8. - Procédé selon l'une des revendications 1 à 7, dans lequel le premier laser (1) et/ou le deuxième laser (2) présentent une puissance de 0,001 kW à 100 kW.

9. - Procédé selon l'une des revendications 1 à 8, dans lequel la température de la première zone locale de chauffage (1b) et/ou de la deuxième zone locale de chauffage (2b) sont déterminées par un premier pyromètre (5a) et/ou un deuxième pyromètre (5b).

10. - Procédé selon l'une des revendications 1 à 9, dans lequel la température de la première zone locale de chauffage (1B) est maintenue plus basse que la température de la deuxième zone locale de chauffage (2B).

11. - Procédé selon l'une des revendications 1 à 10, dans lequel l'arête de vitre (3) est guidée le long du premier laser fixe (1) et du deuxième laser fixe (2).

12. - Procédé selon l'une des revendications 1 à 10, dans lequel le premier laser (1) et le deuxième laser (2) sont guidés le long de l'arête de vitre fixe (3).

13. - Procédé selon l'une des revendications 1 à 12, dans lequel le premier pyromètre (5aA) et le deuxième pyromètre (5b) ainsi que le premier laser (1) et le deuxième laser (2) sont reliés à un dispositif de commande laser (6).

14. - Procédé selon la revendication 13, dans lequel la puissance laser du premier laser (1) et du deuxième laser (2) est commandée par le dispositif de commande laser (6) en fonction du premier pyromètre (5a) et du deuxième pyromètre (5b).

15. - Procédé selon l'une des revendications 1 à 14, dans lequel le premier faisceau laser (1a) et/ou le deuxième faisceau laser (2a) présentent un diamètre de 1 mm à 3 mm.
